# EUROPÄISCHE PATENTSCHRIFT

(11) **EP 2 429 974 B1**
(45) Veröffentlichungstag und Bekanntmachung des Hinweises auf die Patenterteilung: **29.04.2015**
(21) Anmeldenummer: 09776677.8
(22) Anmeldetag: 03.06.2009
(51) Int. Cl.: C05D 3/00, C05F 7/00, C05F 9/00, C05F 11/00, C02F 11/14

(54) **VERFAHREN UND VORRICHTUNG ZUR HERSTELLUNG VON FESTSTOFFARTIGEM, BIOLOGISCH ABBAUBAREM DÜNGE- ODER BODENLOCKERUNGSMITTEL AUS KOMMUNALEM UND/ODER INDUSTRIELLEM KLÄRSCHLAMM**
METHOD AND DEVICE FOR PRODUCING SOLID-LIKE, BIODEGRADABLE FERTILIZER OR SOIL-LOOSENING AGENTS FROM MUNICIPAL AND/OR INDUSTRIAL SLUDGE
PROCÉDÉ ET DISPOSITIF POUR PRODUIRE UN ENGRAIS OU UN AGENT D'AMEUBLISSEMENT DU SOL, BIODÉGRADABLE, SOUS FORME SOLIDE, À PARTIR DE BOUES D'ÉPURATION MUNICIPALES ET/OU INDUSTRIELLES

(30) Priorität: 13.05.2009 DE 102009021165
(43) Veröffentlichungstag der Anmeldung: 21.03.2012
(73) Patentinhaber: Loewe-Fürstenberg, Armand, 59387 Ascheberg (DE)
(72) Erfinder: Loewe-Fürstenberg, Armand, 59387 Ascheberg (DE)
(74) Vertreter: Hoffmeister, Helmut
(86) Internationale Anmeldenummer: PCT/EP2009/003955
(87) Internationale Veröffentlichungsnummer: WO 2010/130276

(56) Entgegenhaltungen:
- EP-A- 0 221 219
- DE-C1- 4 409 649
- FR-A- 2 795 401
- US-A- 5 186 840
- US-A- 5 618 442
- US-A- 5 853 450
- US-A1- 2002 043 500
- US-A1- 2003 136 165
- CHEMICAL ABSTRACTS, no. 13, 25 September 1989 (1989-09-25), Columbus, Ohio, US; abstract no.: 111:114386w, Novak, Ladislav; Mjartanova, Darina; Matejekova, Viera; Furmanova, Maria; Drazova, Tatiana; Fedorik, Radovan: "Soil amendement comprising calcium hydroxide and wastewater treatment sludge", page 593, XP000153765

## Beschreibung

Die Erfindung betrifft ein Verfahren zur Herstellung von feststoffartigem, biologisch abbaubarem Düngemittel aus kommunalem und/oder aus Nahrungsmittel- und Papierindustrie stammendem Klärschlamm, mit Zugabe von alkalischen Substanzen.

FR 2 795 401 A beschreibt ein Verfahren zur Behandlung und Verwertung von organischen Abfällen. Die organischen Abfälle, darin Klärschlamm werden mit Calciumoxid mechanisch vermischt, bis eine homogene Mischung entsteht. Die Mischung wird dann einem Umwandler zugeführt und dort einer exothermen Reaktion unterzogen. Auf dieser Weise kann ein stabilisiertes, pathogenfreies Produkt hergestellt werden. Nachteilig bei dem Verfahren ist, dass es keine technische Lösung offenbart, mit der die für die Pflanzen lebenswichtigen Substanzen, wie Oligoelemente, gezielt liefern werden können.

Auf Grund der mehrjährigen Erfahrung mit der Verwendung von synthetischen Düngemitteln wurde festgestellt, dass ihre Verwendung negative Folgen für die natürlichen Eigenschaften des Erdbodens, vor allem eine zunehmende Bodenerosion und chemische Verschmutzung des natürlichen Wassersystems mit sich bringt. Daher wurde es versucht, umweltfreundliche Düngemittel auf Basis von organischen Materialien herzustellen, die den Erdboden mit Nährstoffen anreichern können.

Es ist bekannt (siehe US 5 853 450 A), bioorganische oder Abwasser-Klärschlämme (sludges), aber auch kommunale Abfälle, mit alkalischen Materialien zu mischen und nach chemischer Reaktion und Erhitzung zu Düngemitteln oder im Rahmen einer Kompostierung zu verarbeiten. Es werden in der genannten US-Schrift verschiedene Zusätze beschrieben, auch solche, die als Adsorbentien mit Puffereigenschaften sind und als anorganische Zusätze bezeichnet werden können (Sp. 9, Zeilen 5-15 der US 5 853 450 A). Nachteilig hierbei dürfte sein, dass eine erhebliche gesundheitsgefährdende Verunreinigung der Düngemittel durch wahllose Zugabe solcher Substanzen eintreten kann.

Bekannt ist auch, den Klärschlamm zwecks Düngemittelherstellung mit alkalischen Substanzen, wie Branntkalk, zu behandeln. So beispielsweise ist in DE 19644612 A1 ein Verfahren zur Herstellung von festen, vorzugsweise pelettierten Düngemitteln aus trockenen Abfällen, und zwar unter Verwendung von Wasser, beschrieben. Zum Pelettieren wird üblicherweise das notwendige Wasser in Form von schlammförmigen Abfällen eingebracht, wobei die Mengen an trockenem Abfall einerseits und schlammförmigem Abfall andererseits so gewählt werden, dass eine zusätzliche nachträgliche Trocknung vermieden werden kann. Zur Bindung von überschüssiger Feuchtigkeit können Branntkalk, Dolomitbranntkalk oder calciumoxidhaltige Flugasche zugemischt werden. In der Schrift DE 19644612 A1 sind keinerlei Verfahrensschritte angegeben, die nötig sind, um die starke, wenn nicht gewaltige exothermische Reaktion von Calciumoxid mit Wasser zu beherrschen.

Hinzuweisen ist auch auf ein Verfahren zur Herstellung von pasteurisierten oder getrockneten Böden (siehe US 2002/0043500 A1), bei dem ein organischer Abfall entwässert wird und eine alkalische Mischung durch exotherme Reaktion einen Trockungsprozess hervorruft.

In EP 0 221 219 A1 ist ein Verfahren zur Herstellung eines Bodenverbesserungsmittels beschrieben, bei dem eine Mischung aus Klärschlamm, Kohlenstoffträger, Calciumcarbonat, Phosphat, Gips und Maisstärke befeuchtet wird. Danach werden der Mischung spezielle lyophilisierten Bakterien zwecks Fermentation zugegeben. Die entstandene Biomasse wird in Granulatform hergestellt. Die Bakterienstämme bzw. Mikrolebewesen erzeugen CO₂. Der Sauerstoff aus der Luft wird von den Mikrolebewesen verbraucht und zu CO₂ umgewandelt. Genau das gilt es zu vermeiden.

Bei der Schrift US 5 618 442 A handelt es sich um ein Verfahren zur Behandlung von Klärschlamm, umfassend folgende Schritte:
- Mischen des Klärschlamms mit mindestens einem alkalischen Zusatz zwecks Änderung des pH-Wertes, um Krankheitserreger in der Mischung zu reduzieren;
- Zuführen des alkalischen Schlamms und Zusatzstoff-Mischung einer Pasteurisierungskammer, die einen geschlossenen Behälter mit einem kontinuierlich bewegbaren Gummiboden umfasst,
- Austragen des Gemisches aus der Austrittsöffnung der Pasteurisierungskammer. Nachteilig ist, dass der Gummiboden infolge einer erhöhten Temperatur spröde wird.

In US 5 186 840 A ist ein Verfahren zur Behandlung von teilweise entwässertem Klärschlamm beschrieben, bei dem der Klärschlamms mit alkalischen Additiven, wie Calciumoxid, in einer geschlossenen, länglichen Mischkammer vermischt wird. Das Verfahren beschreibt eigentlich die Funktionsweise einer Vorrichtung mit der schräg angeordneten Mischkammer, in deren Inneren zwei gegenläufig drehende Schnecken befindlich sind, sowie Arbeitsparameter der Vorrichtung.

DE 44 09 649 C1 beschreibt ein Verfahren zum Aufbereiten von wässrigem Klärschlamm aus Kläranlagen, bei dem der Klärschlamm durch Beimengung von saugfähigem Zellulosematerial entwässert wird, bis die Säugkraft des Zellulosematerials erschöpft ist. Danach wird dem sich in einem Mischbehälter befindlichen Gemisch Calciumoxid zugeführt. Mit dem Beimengen von Calciumoxid wird dem Gemisch nochmals Wasser entzogen, bis ein granulat- bzw. pulverförmiges Produkt entsteht.

Im Chemical Abstract Nr.13, 25. September 1989, Columbus, Ohio, US ist eine Zusammensetzung beansprucht (vgl. Ansprüche CS 259,582 = CS 870 0023 A1) für ein Bodenverbesserungsmittel, enthaltend Kalkhydrat, umfassend 25 bis 100 Gew.-Teile von gelöschtem Kalk und 10 bis 30 Gew.-Teile von Schlamm aus Abwasserbehandlung von Zellstoff, welcher 60 bis 82 Gew.% Wasser und 10% bis 23 Gew.% Cellulosematerial und 7 bis 20 Gew.% von anorganischen, inerten, wasserunlöslichen Materialien, wie Füllstoff und dergleichen, enthält.

US 2003/136 165 A1 beschreibt ein Verfahren zur Desinfektion und Stabilisierung von organischen Abfällen, darin Klärschlamm, umfassend ein Vermischen mit einem oder mehreren mineralischen Nebenprodukten, wie Kalkstein, um eine Mischung mit einem pH von weniger als etwa 9 zu bilden, wobei am meisten bevorzugt der pH-Wert zwischen etwa 7 und 9 ist. Der angestrebte pH-Wert ist für einen Langzeitdünger ungünstig (zu klein), denn der Regen einen pH-Wert von etwa 6 hat. Dies kann zur Übersäuerung des Ackerbodens führen.

Keines der vorgenannten Verfahren löst das Problem einer gezielten Zuführung von Spurenelementen in die Mischung und damit in das feste Produkt.

Die Aufgabe der Erfindung ist, ein Verfahren zur Herstellung von feststoffartigem, biologisch abbaubarem Düngemittel aus kommunalem und/oder aus Nahrungsmittel- und Papierindustrie stammendem Klärschlamm zu konzipieren, bei dem die alkalischen Substanzen, insbesondere Calciumoxid, gezielt und unter kontrollierbaren Bedingungen der exothermischen Reaktion in das Herstellungsverfahren eingeführt werden können. Durch den Einsatz von biologisch abbaubarem Düngemittel sollen die bisher schädlichen anthropogenen Einflüsse auf den Erdboden eliminiert und zukünftig verhindert werden.

Diese Aufgabe ist durch ein Verfahren der im Oberbegriff genannten Art gelöst, bei dem
- während des Mischprozesses im Durchlaufmischer dem Klärschlamm- und Celluloseschlamm-Gemisch Calciumoxid unter einem Druck zwischen 1,0 bar und 50 bar, vorzugsweise zwischen 15 bar und 30 bar, derart zugeführt wird, dass das mit Calciumoxid behandelte Gemisch den Durchlaufmischer (13) verlässt, bevor eine exothermische Reaktion einsetzt,
- dem dehydrierten Gemisch - nach deren Abkühlung - Oligoelemente zugeführt werden,
- und danach das dehydrierte und mit den Oligoelementen angericherte Gemisch einer Nachtrocknung mit anschließender Pulverisierung, Granulierung oder Pelettierung unterzogen wird.

Jeder Abfall aus Lebensmittelindustrie-, Haushalt, Landwirtschaft, Schlachthof, Papierindustrie, Kartonagen, unbehandeltem Holz ist zur Herstellung in ein Düngemittel in diesem erfindungsgemäßen Verfahren geeignet, vorausgesetzt, er weist einen organischen Bestandteil auf und umfasst nicht ein übermäßiges Maß an Schwermetallen und anderen Toxinen. Klär- und Celluloseschlamm sind besonders geeignete Ausgangsmaterialien.

Bevorzugt sollte der Wassergehalt des Abfalls etwa 50 bis 70 Gew.-% betragen und die am meisten geeigneten Materialien sind solche mit einem Feststoffgehalt von etwa 25 bis 35 Gew.- %. Der Wassergehalt eines organischen Abfallmaterials kann natürlich entsprechend zur Verwendung im erfindungsgemäßen Verfahren eingestellt werden.

Das Verfahren gemäß Erfindung kann in einem geschlossenen Chargenumwandler bei Atmosphärendruck durchgeführt werden, bis der Reaktionszyklus abgeschlossen ist. Ein erhöhter Druck ist zu vermeiden, da durch die Erhöhung des Drucks im Umwandler eine übermäßige Hyperthermie entstehen kann. Eine exzessive Temperaturerhöhung würde negative anlösende Eigenschaften auf Kunststoffe haben und damit Toxine (DIOXIN, FURAN, PCB u. ä.) auslösen, die selbst in einer Luftwaschanlage nur mit enormem Kostenaufwand entsorgt werden könnten.

Durch die Zugabe von faserigem Celluloseschlamm wird eine erwünschte Eigenschaft des Endproduktes, also des feststoffartigen Düngemittels erzielt, nämlich die Fähigkeit, die Feuchtigkeit zu absorbieren un durch die Kapillare weiter zu transportieren.

Um die exothermische Reaktion von Calciumoxid mit dem in dem Gemisch enthaltenen Wasser zu vermeiden, wird das Calciumoxid, vorzugsweise in Nebelform, vorzugsweise nur in den unteren, d. h. den der Erdanziehungskraft zugewandten Teil der kontinuierlich nach unten fließenden Masse einzuspritzen.

Vorzugsweise wird als Calciumoxid Hartbranntkalk eingesetzt, dessen Reaktionszeit frühestens in 6 Minuten einsetzt.

Der Hartbranntkalk ist unter einem Druck zwischen 1,0 bar und 50 bar, vorzugsweise zwischen 15 bar und 30 bar dem Gemisch zugeführt werden.

Vorzugsweise entspricht der untere Teil des im Durchlaufmischer momentan befindlichen Gemisches etwa einer Volumenhälfte des Gemisches bzw. des Durchlaufmischers.

Der Hartbranntkalk kann an mehreren Stellen eines Mantels des Durchlaufmischers verteilt in die untere Volumenhälfte der homogenisierten Masse, vorzugsweise konzentrisch eingespritzt werden.

Zwecks Verbesserung der Homogenisierung kann das Besprühen der Masse mit dem Hartbranntkalk in mehreren Ebenen auf der Höhe der unteren Volumenhälfte erfolgen. Dabei kann der Hartbranntkalk über rotierende und/oder schwenkbare Einspritzdüsen in die Masse gelangen.

Es ist nicht ausgeschlossen, das Calciumoxid und/oder Mineralien und/oder Oligoelemente über Öffnungen zuzuleiten, die auf der ganzen Mantelhöhe des Vormischers verteilt sind.

Vorzugsweise liegen die dem Durchlaufmischer zugeführten Mineralien in Pulverform vor. Die Pulverteilchen können eine Größe zwischen 0,01 mm bis 0,08 mm aufweisen. Es wird jedoch eine mehlartige Pulverisierung, d. h. im Bereich 0,02 mm bis 0,06 mm angestrebt, bei der ein hohes Oberflächen-Volumen-Verhältnis erzielbar ist.

Es ist nicht ausgeschlossen und technisch ausführbar, die Pulverteilchen als Nanopartikeln in das Verfahren einzusetzen. Allerdings sollte man hier gesundheitliche Aspekte berücksichtigen und erforderliche Schutzmaßnahmen vornehmen.

Die pulverigen Mineralien können unter atmosphärischem oder unter einem erhöhten Druck einer zweiten, oberhalb der ersten liegenden Volumenhälfte des Durchlaufmischers zugeführt werden. Der erhöhte Druck liegt im Bereich zwischen 1,5 bar und 30 bar, vorzugsweise zwischen 5 bar und 15 bar. Soll der atmosphärische Druck verwendet werden, gelangen Mineralien zusammen mit dem Klär- und Celluloseschlamm in den Durchlaufmischer. Eine effektivere Lösung ist, die Mineralien über Spritzdüsen, ähnlich wie beim Hartbranntkalk, der homogenisierten Masse zuzuleiten.

Die pulverförmigen Stoffe, also Hartbranntkalk und Mineralien können auch impulsartig, beispielsweise in vorbestimmten Zeitintervallen zugeführt werden. Ein anderer positiver Aspekt der impulsartigen Zuführung von pulverförmigen Stoffen dem Durchlaufmischer ist ein Reinigungseffekt der Einspritzdüsen.

Als Mineralien können Gesteinsmehle, wie Zeolithe, Lavamehl, Basaltmehl und Bentonit in Frage kommen. Die in das Verfahren eingesetzten Gesteinsmehle enthalten immerhin 20% bis 30 % von Hauptnährelementen, nämlich Ca (Calcium), Mg (Magnesium), K (Kalium), Na (Natrium), P (Phosphor), wobei über 70% davon auf Calcium und Magnesium entfallen.

Die Notwendigkeit, Gesteinsmehle in das Land- und forstwirtschaftliche Düngemittel einzubauen, wird teilweise negiert durch wenig aussagekräftige Laboruntersuchungen. Dabei ist dem Durchschnittsfachmann der Begriff der Langzeitdüngung bekannt, dass nur durch Langzeitverwitterungsversuche das gesamte Wirkungsspektrum auf die Bodenfruchtbarkeit erkennbar gemacht werden kann.

Die Verwendung von Spurenelementen als Dünger, sogenannte Spurenelementdüngung zu ausgewählten Pflanzensorten, beispielsweise Weizen, ist ebenfalls bekannt. Zwar sind die Spurenelemente unentbehrlich für die Funktionen der lebenden Organismen, darin Pflanzen, jedoch durch den eingesetzten Spurennährstoffdünger keine statistisch nachweisbare Mehrerträge erreicht werden können, wenn nur die Spurenelemente allein verwendet werden.

Laboruntersuchungen zum Verwitterungsverhalten von FRAGSTEIN et al. (1988) oder von BLUM et al.(1989) zur Verwendung von Gesteinsmehlen in der Landwirtschaft vermitteln keine Erkenntnisse über ökologisch und ökonomisch gleichermaßen sinnvollen Einsatz in der Landwirtschaft. Aus reinen Laboruntersuchungen können keine seriösen Rückschlüsse über Eignung und Wirkung auf die landwirtschaftlich genutzten Böden gezogen werden. Der einzige Nutzen solcher Untersuchungen liegt in der Charakterisierung und Differenzierung von Bestandteilen und Wirksamkeit zwischen den verschiedenen Gesteinsmehlen. Die Beurteilung der Eignung von Gesteinsmehlen für den komplementären Einsatz in Düngesystemen wird fast ausnahmslos anhand ihres Nährelementgehaltes durchgeführt. Oft wird auch nur der PK-Gehalt berücksichtigt. Bei FRAGSTEIN (1988) sogar nur noch der "Gehalt von verfügbaren Nährstoffen."

Die langsamere, aber dafür kontinuierlich ablaufende Umsetzung die in dem Trägerprodukt befindlichen Nährstoffe werden in Laborversuchen nie festgestellt, weil lang anhaltende Verwitterungsprozesse auch in mehrstündigen Versuchen nicht erfasst werden können. Das bedeutet wiederum, dass angeblich nur ein Teil dieser notwendigen Nährstoffelemente im Laboratorium erfasst und als verfügbar eingestuft wird.

Im Zuge der biologisch-chemischen Verwitterung kommt es zu Freisetzung von Nähr- und Spurenelementen in längeren Zeiträumen. Die positive Erkenntnis ist, dass man mit einer einzigen Düngung einen Langzeitdüngeeffekt erzielt. Dabei werden gleichzeitig die Hauptbestandteile Kieselsäure (SiO₂) und Tonerde (Al₂O₃) frei. Sie werden Bestandteile des neu gebildeten sekundären Tonminerals, also des Tons. Die Tonerde hat eine fundamentale Bedeutung für die Bodenfruchtbarkeit. Quintessenz: Basische Gesteinsmehle in der richtigen Granulometrie bringen ökologische und ökonomische Zielsetzungen in Einklang.

Die Qualitätsmerkmale, nämlich ein Kieselsäuregehalt zwischen 40 und 50% und eine Körnung, die den Wert 0,06 mm (zumindest in 80% der Gesamtmasse) nicht überschreitet sind zwingend notwendig für die Einschätzung der ökonomischen Wettbewerbsfähigkeit gegenüber herkömmlichen Düngemitteln, die diesen Qualitätsmerkmalen nicht genügen. Die Gesundheit der Pflanzen, der Tiere und der Menschen verlangt die Erfüllung dieses Standards, ein hohes Preis-Leistungs-Verhältnis. Wirkungslose Quarzanteile oder teuer bezahlte CO₂-Gehalte soll der Kunde nicht mitfinanzieren.

Eine Alkalisierung sollte nicht mit Ammoniak wegen seiner Flüchtigkeit ausgeführt werden. Die geeignete alkalische Zugabe ist Calciumoxid (Kalk, CaO). Calciumoxid ist das besonders bevorzugte Alkali zur Verwendung im Verfahren gemäß Erfindung.

Da die Zugabe von CaO nicht das einzige Alkali ist, wird die Menge etwa 16 bis 22% des Endproduktgewichts ergeben. Geeignete Mengen anderer Alkalis können einfach unter Berücksichtigung ihrer Molekulargewichte, ihrer Basenäquivalente und ihrer Dissoziationskonstanten berechnet werden.

Die Zugabe eines Alkalis ist die wichtigste Verfahrensstufe in dem Verfahren gemäß Erfindung. Die besondere Wirkung ist die alkalische Hydrolyse von organischen Bestandteilen im Abfall, so dass sie leichter durch Pflanzen und Bodenbakterien verstoffwechselt werden können. Zweitens resultiert die chemische Reaktion in einem Anstieg der Temperatur des Abfalls, was, abhängig von der Umgebungstemperatur, bei der das Verfahren ausgeführt wird, die Wirkung einer Reduzierung der Mikrobenpopulation aufweisen kann. Aus diesem Grunde wird es nicht beeinflusst durch sich ändernde Umgebungstemperaturen, da es sich bei dem erfindungsgemäßen Verfahren um ein absolut geschlossenes System handelt. Durch die chemisch-physikalische Reaktion entsteht eine Exothermie auf 110 °C, der pH-Wert wird erhöht auf 12.5. Hierdurch wird eine bakterizide und fungizide Wirkung erreicht.

Das Endprodukt ist stark alkalisch, stabil und desinfiziert, also inert. Er kann ohne Geruchs- oder Gesundheitsprobleme transportiert und gelagert werden. Weiterhin werden bei diesem pH- Wert Korrosionsprobleme vermieden. Folglich kann Abfall, der in ein Düngemittel mit einem pH von 12 und plus umgewandelt wurde, für eine beträchtliche Zeit gelagert werden.

In allen Ausführungsformen der Erfindung kann Stickstoffdioxid in das organische Abfallmaterial als Feststoff
eingebracht werden.

Das durch den Durchlaufmischer kontinuierlich fließende Gemisch kann chargenartig im Umwandler weiter behandelt werden. Da im Industrieverfahren eher größere Mengen an Klär- und Celluloseschlamm in Frage kommen, können mehrere Umwandler von entsprechend großem Volumen vorgesehen sein, die die aus dem Durchlaufmischer herabfallende Masse aufnehmen können. Dies ist notwendig, weil der Mischvorgang im Umwandler eine bis drei Stunden, vorzugsweise etwa zwei Stunden dauern kann.

Dabei soll die aus dem Durchlaufmischer auslaufende Masse vor den äußeren Einflüssen abgeschirmt sein und, was in Hinblick auf mögliche Freisetzung von Methangas besonders wichtig ist, luftdicht dem Umwandler zugeleitet werden.

Die beim Mischvorgang in den Umwandlern entstehende Hyperthermie kann durch Wasser- oder Luftkühlung temperiert werden. So kann die entstandene Hyperthermie so eingestellt sein, dass eine Temperatur von etwa 120°C nicht überschritten wird. Sollten im Umwandler Kunststoff-Stücke mitbehandelt werden, die einer nachfolgenden Aussortierung unterliegen, soll eine Temperatur von 110°C nicht überschritten werden, sonst können die Kunststoff-Stücke anschmelzen und eine Klumpenbildung durch Anlösen entstehen und Freiwerden von toxischen Gasen initiieren.

Das durch Hyperthermie erwärmte Wasser kann zu einem Wasserkreislauf zurückgeleitet und für Heizungsunterstützung genutzt werden.

Das dem Umwandler entnommene, noch heiße Gemisch kann nachgetrocknet und pulverisiert, granuliert oder pelletiert werden. Vorzugweise wird das Gemisch zuerst einem zweiten Mischer unter Temperaturabsenkung zugeleitet und dort zusammen mit Zusätzen, wie Oligoelemente und Zeolithe, einer weiteren Homogenisierung unterzogen, bevor es nachgetrocknet wird. Zeolithe vertragen sich nicht gut mit alkalischen Substanzen, insbesondere bei erhöhter Temperatur, daher wird es vorgeschlagen, diese nicht dem ersten Mischer und dem Umwandler, sondern - nach der Entnahme des Gemisches aus dem Umwandler - dem zweiten Mischer zuzuleiten. Ebenso sollen die Oligoelemente bei einer niedrigeren Temperatur behandelt werden.

Zu den notwendigen, je nach Bodenbeschaffenheit auswählbaren Oligoelementen zählen beispielsweise Bor, Mangan, Kupfer, Magnesium, Vanadium, Chrom, Eisen, Silizium, Zink und Titan.

Dem zweiten Mischer können auch vorher vorgemischte, aus Verarbeitung von Hausmüll gewonnene organische Substanzen zugeführt und dort zusammen mit der dem Umwandler entnommenen, aus der Verarbeitung von Klärschlamm stammenden Masse und mit den Oligoelementen, Zeolithen und gegebenenfalls mit anderen Mineralien, wie Bentonit, einer weiteren Homogenisierung unterzogen werden.

Eine Vorrichtung zur Durchführung des Verfahrens besteht aus:
- wenigstens einem Klärschlammbunker,
- wenigstens einem Mischer,
- wenigstens einem Umwandler,
- wenigstens einem Holz- und Holzwerkstofflager,
- wenigstens einem Schredder zur Zerkleinerung von Holzabfällen,
- wenigstens einer Steinmühle zur evtl. Nachbehandlung der Mineralien,
- wenigstens einem Silo zur Lagerung von Mineralien und Oligoelementen,
- wenigstens einer Sortieranlage,
- wenigstens einer Granulierungs- und/oder Pelettierungs- anlage,
- und aus üblichen Förderern, Steuerungen, Armaturen und Rohrleitungen.

Wichtig ist, dass der Mischer zur Aufnahme von Klärschlamm als zylindrischer Durchlaufmischer gefertigt ist, dessen Mischorgan wenigstens eine Drehachse aufweist, die diagonal oder senkrecht zur waagerechten Bodenfläche, auf der der Mischer aufgestellt ist, gerichtet ist. Dabei kann der Durchlaufmischer einen Mantel aufweisen, an dem wenigstens eine Revisionsöffnung und wenigstens eine, vorzugsweise mehrere Öffnungen zur Zuführung von Calciumoxid angeordnet sind.

Die Vorrichtung ist computergesteuert.

Das Verfahren gemäß Erfindung erlaubt es, ein organisches Düngemittel zu erzeugen, das stabil ist, welches die Umwelt nicht schädigt und das im Vergleich zum ursprünglichen Abfallstickstoff zusätzlich angereichert ist. Weiterhin ist die Mikroorganismenzahl im Endprodukt, wie Bakterien, Pilze, Mikroalgen und Viren nicht enthalten. So wird der Stickstoffgehalt des Düngemittels nicht durch einen mikrobiellen Stoffwechsel vor dem Aufbringen auf die Erde verringert. Es hat sich gezeigt, dass das Düngemittel gemäß der vorliegenden Erfindung bei der Verbesserung von Ernteerträgen so wirksam wie herkömmliche anorganische Düngemittel ist.

Es wurde festgestellt, dass Reaktionszeiten verringert werden und dass die Verfahrenseffizienz beträchtlich erhöht werden können. Der pH-Wert des Ausgangsabfalls wird zunächst durch Zugabe von CaO erhöht, ohne eine Ansäuerung mit Stickstoffdioxid. Diese Effizienzverbesserungen machen die Herstellung eines Düngemittels aus Abfallmaterialien kommerziell durchführbar, insbesondere da einige Abfälle, z. B. Klärschlämme, oftmals mit Alkali zur Stabilisierung und Desinfizierung vor einem Transport und einer Entsorgung behandelt werden. Weiterhin erzielt man mit einem solchen Verfahren das doppelte Ziel einer Stickstoffanreicherung und einer Desinfizierung, während ein stabiles und für die Umwelt annehmbares Produkt hergestellt wird, welches mehr als 50% des Gesamtstickstoffgehalts in Form von Nitriten und Nitraten aufweisen kann. Einer der wichtigsten Faktoren hierbei ist, dass man unterschiedliche Branntkalksorten einsetzen kann. Hier ist ein besonderer Gesichtspunkt des erfindungsgemäßen Verfahrens zu sehen.

Mit dem Verfahren kann ein Düngemittel hergestellt werden, dessen Gesamtstickstöffgehalt von etwa 6% bis etwa 13 % des Trockengewichts beträgt, was für die meisten Anwendungen ausreichend ist. Sie können jedoch gegebenenfalls angepasst werden, um ein Düngemittel herzustellen, welches einen Gesamtstickstoffgehalt von bis zu 15% Trockengewicht aufweist.

Diese abschließend mögliche Zugabe von Ammoniak erhöht weiter den Gesamtstickstoffgehalt und ist insbesondere für Düngemittel mit hohem Stickstoffgehalt vorteilhaft, da das geringere Molekulargewicht es ermöglicht, dass der Stickstoffgehalt des Abfalls ohne wesentliches Erhöhen der Masse erhöht wird.

Zur Herstellung eines Düngemittels, welches zum Aufbringen auf den Erdboden geeignet ist und leicht lager- und transportfähig ist, muss der Abfall nicht nach irgendwelchen üblichen Verfahrensschritten, auf einen Wassergehalt von 20 Gewichtsprozenten oder weniger getrocknet werden. Er wird ohne eine weitere kostenintensive und energieaufwendige Vortrocknung verarbeitet.

Die Erfindung ist anhand der Zeichnung in zwei Ausführungsbeispielen näher erläutert.

Die Figuren zeigen:
- Fig. 1: ein Blockschema des Verfahrens, umfassend die wichtigsten Teile einer Anlage,
- Fig. 2: einen Vormischer in einer perspektivischen, schematischen Ansicht,
- Fig. 3: den Vormischer gemäß Fig. 2 in einer schematischen Seitenansicht,
- Fig. 4: Detail "D" gemäß Fig. 3 im Teilschnitt,
- Fig. 5: einen Mischer mit doppeltem Rührwerk, in einer schematischer Seitenansicht,
- Fig. 6: einen Mischer mit drei Drehachsen, in einer schematischer Draufsicht,
- Fig. 7: einen Schnitt A-A gemäß Fig. 6,
- Fig. 8: ein Blockschema des Verfahrens in einer anderen Ausführungsform,
- Fig. 9: einen Klärschlammbunker, in einer schematischen Ansicht,
- Fig. 10: einen schräg angeordneten Umwandler, in einer schematischer Ansicht,
- Fig. 11: ein Endprodukt in einer perspektivischen Ansicht, und
- Fig. 12: einen anderen Vormischer, mit wendelartigem Rührwerk, in einer schematischer Ansicht.

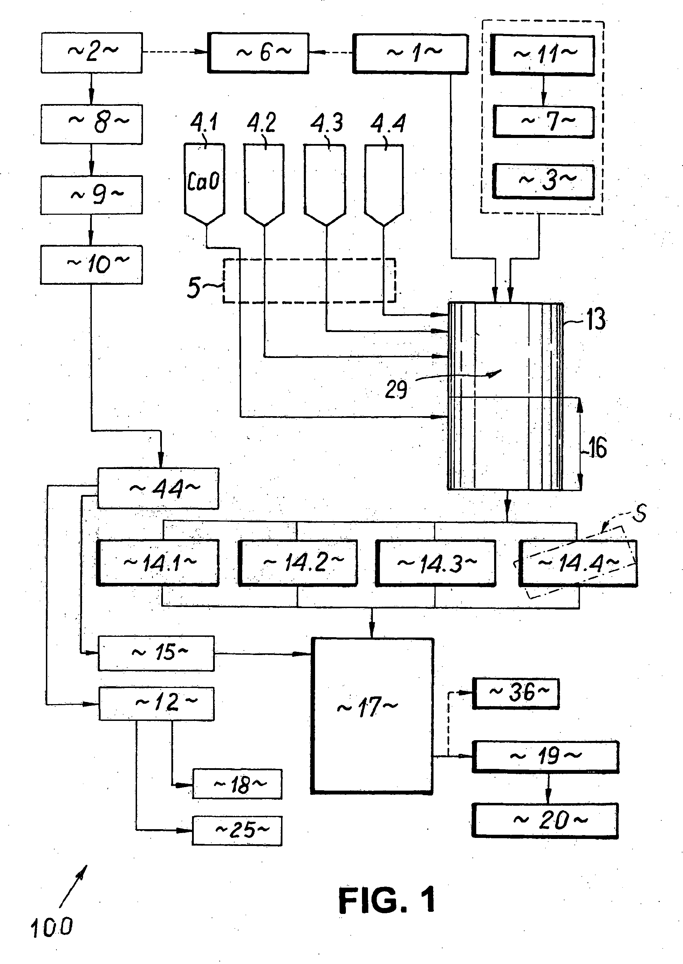

In Fig. 1 ist eine Vorrichtung 100, in Weiterem als Anlage bezeichnet, dargestellt, die sich aus folgenden Teilen zusammensetzt:
- aus einem Klärschlammbunker 1,
- einem Celluloseschlammbunker 3,
- einem ersten, dem Klärschlammbunker 1 und dem Celluloseschlammbunker 3 nachgeschalteten Mischer 13,
- einem Holz- und Holzwerkstofflager 11 mit einem dazu gehörenden Schredder 7, aus dem der zerkleinerte Holz in den Celluloseschlammbunker 3 gelangt,
- aus vier waagerecht gestellten Umwandlern 14.1, 14.2, 14.3, 14.4, die dem ersten Mischer 13 nachgeschaltet sind,
- einem zweiten Mischer 17,
- mehreren Silos 4.1, 4.2, 4.3, 4.4 zur Lagerung von Hartbranntkalk, Mineralien und Oligoelementen,
- einer Gesteinsmühle 5,
- einer Granulierungs- und Pelletierungsanlage 19,
- und aus üblichen, nicht gezeigten Förderern, Steuerung, Armatur und Rohrleitungen.

Außerdem ist die Anlage (Vorrichtung 100) mit folgenden Teilen ausgestattet, die in beliebiger Zeit, auch zeitparallel, jedoch unabhängig von oben erwähnten in Betrieb genommen werden können: mit einem Hausmüllbunker 2, einer Aufschlitzvorrichtung 8 für mit dem Hausmüll befüllte Kunststoffsäcke, einer Sortierungsanlage 9 für den Inhalt der Kunststoffsäcke, einer Müllvorbereitungsanlage 10, einem weiteren Umwandler 44, einer Abnahmevorrichtung 15 (für die organischen Teile von Hausmüll) und einer Sortierungsanlage 12. Mit diesen Teilen der Vorrichtung lässt sich der Hausmüll sortieren, wobei dessen organische Teile nach Bedarf dem zweiten, den Klärschlamm verarbeitendem Mischer 17 (Endmischer) zugeführt werden können.

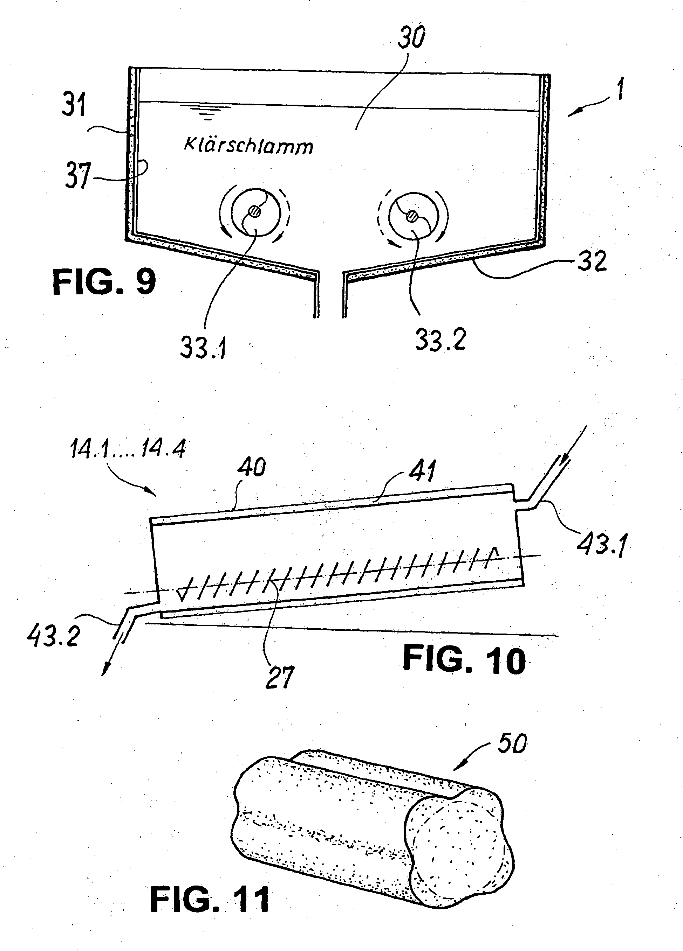

Der in Fig. 9 schematisch dargestellte Klärschlammbunker 1 besteht im Wesentlichen aus:
- einer Wandung 31 aus Stahlbeton, die in einen ebenfalls aus Stahlbeton gefertigten Boden 32 übergeht,
- zwei parallel zueinender angeordneten Schnecken 33.1, 33.2, die auf geringfügiger Höhe oberhalb des Bodens 32 liegen,
- aus einer inneren Verkleidung 37 aus korrosionsbeständigem Material, im vorliegendem Fall aus Edelstahlblech
- und aus nicht dargestellten üblichen Armatur.

Der ähnlich dem Klärschlammbunker 1 aufgebaute Celluloseschlammbunker 3 nimmt auch das im Schredder 7 zerkleinerte, aus dem Holz- und Holzwerkstofflager 11 kommende Holz auf.

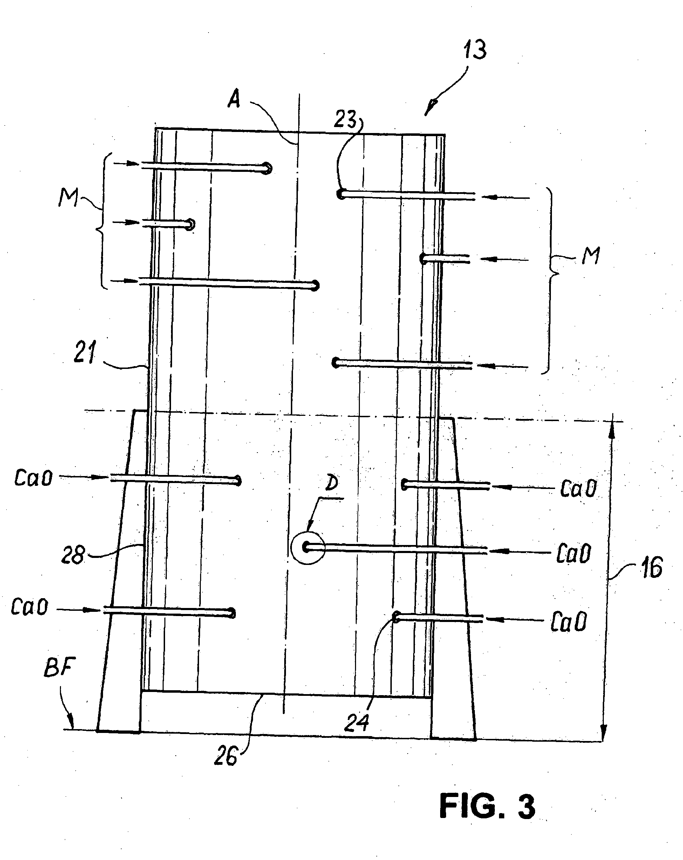

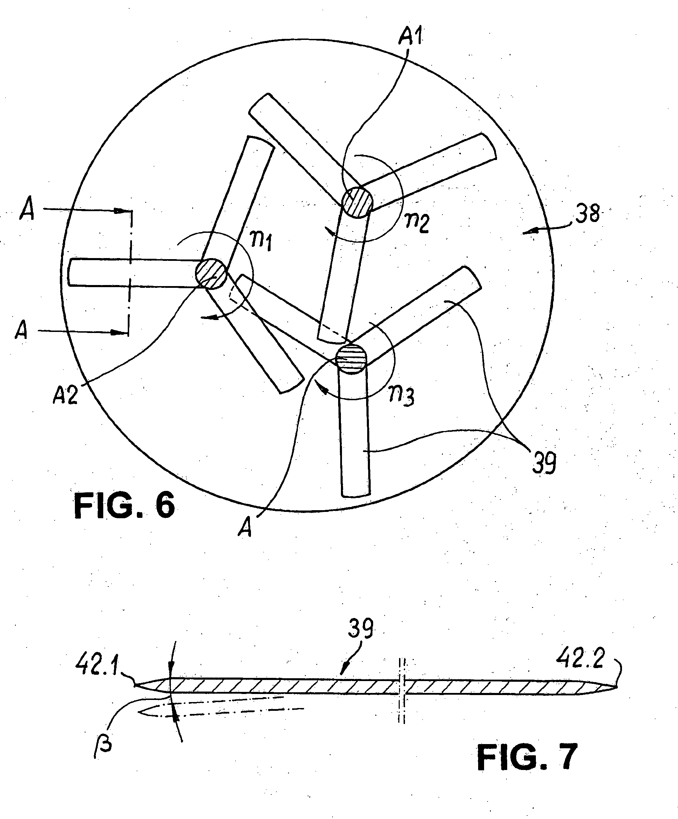

Der Mischer 13 (Vormischer), im Weiteren Durchlaufmischer genannt) ist schematisch in Figuren 3 und 6 dargestellt. Er besteht aus einem beispielsweise auf eine Bodenfläche BF oder Plattform einer Betriebshalle gestellten, aufrechtstehenden zylindrischen Mantel 21, der ein in Fig. 6 gezeigtes Rührwerk 38 beinhaltet. Selbstverständlich ist der Abstand zwischen der Bodenfläche BF und einem Boden 26 des Durchlaufmischers entsprechend dimensioniert, so dass der visköse, herabfließende Inhalt ungehindert abgezogen werden kann. Zu diesem Zweck ruht der Durchlaufmischer auf einer oberen Plattform der Betriebshalle, so dass das Gemisch in die darunter liegenden Umwandler 14.1, 14.2, 14.3, 14.4 unter Gravitationskraft gelangt.

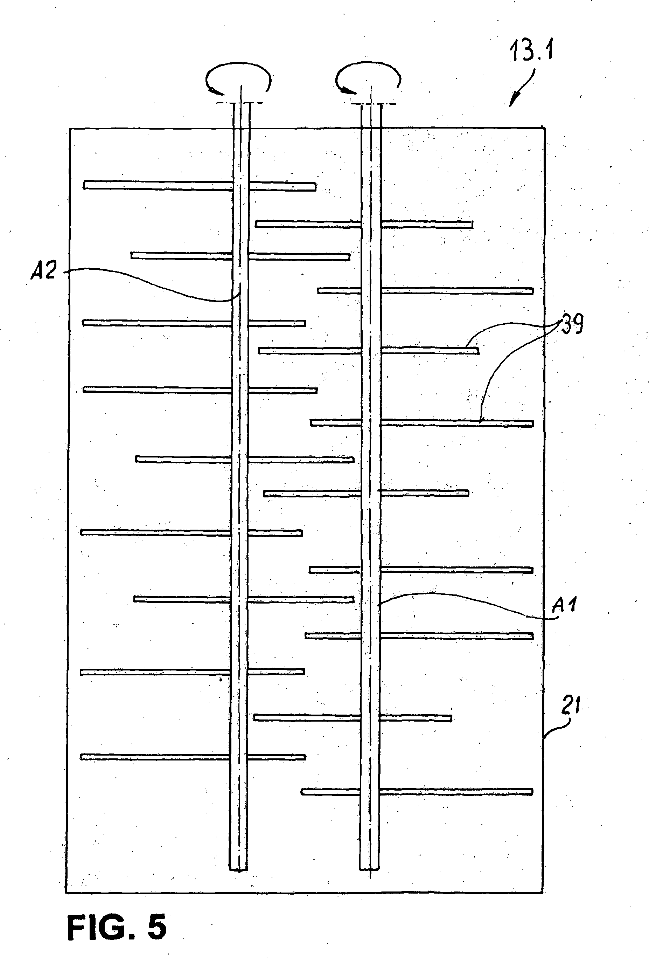

Das Rührwerk 38 des Durchlaufmischers weist drei zueinander parallel verlaufende Drehachsen A, A1, A2 auf, auf denen jeweils auf mehreren Ebenen (wie in Fig.5) verteilte, propellerblattartige Schaufel 39 abnehmbar angebracht sind. Gemäß Fig. 7 weisen die Schaufel 39 jeweils zwei sich gegenüber liegende, scharfe Kanten 42.1, 42.2 auf, wobei die Schaufel 39 einen veränderbaren Anstellwinkel β haben. In Fig. 5 ist ein anderer Mischer 13.1 gezeigt, dessen Rührwerk lediglich zwei Drehachsen A1, A2 aufweist.

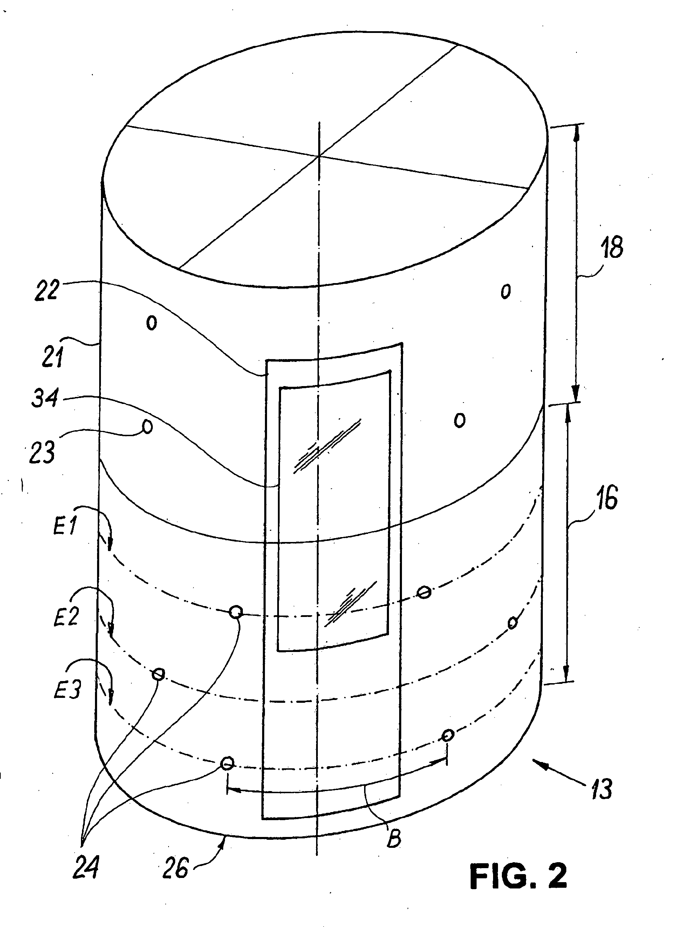

Zweckmäßigerweise weist der in Figuren 3 und 2 dargestellte Durchlaufmischer eine am Mantel 21 eingebrachte Revisionsöffnung 22 in der Form einer mit Sichtfenster 34 versehenen Schwenktür auf, die den Einstieg ins Innere des Durchlaufmischers erlaubt. Das verglaste Sichtfenster 34 ermöglicht wiederum eine visuelle Beobachtung des Homogenisierungsprozesses.

Eine Besonderheit des Durchlaufmischers sind Öffnungen 24 zur Zuführung von Calciumoxid, die an einem unteren, dem Boden 26 des Durchlaufmischers zugewandten Mantelteil 28, und zwar an mehreren parallel zum Boden 26 liegenden Ebenen E1, E2, E3 in gleichen Abständen B voneinander am Mantelteil 28 verteilt sind. Der Mantelteil 28 weist in vorliegendem Fall eine Höhe auf, die etwa einer Volumenhälfte 16 des Durchlaufmischers entspricht. Zur besseren Verteilung von Calciumoxid sind die in einer Ebene liegenden Öffnungen 24 gegenüber den in anderer Ebene liegenden versetzt angeordnet.

Weiterhin weist der Mantel 21 mehrere Öffnungen 23 zur Zuführung von Mineralien auf, die oberhalb des unteren Mantelteils 28, also im Bereich einer oberen Volumenhälfte 18 des aufrechtstehenden Durchlaufmischers 13 liegen.

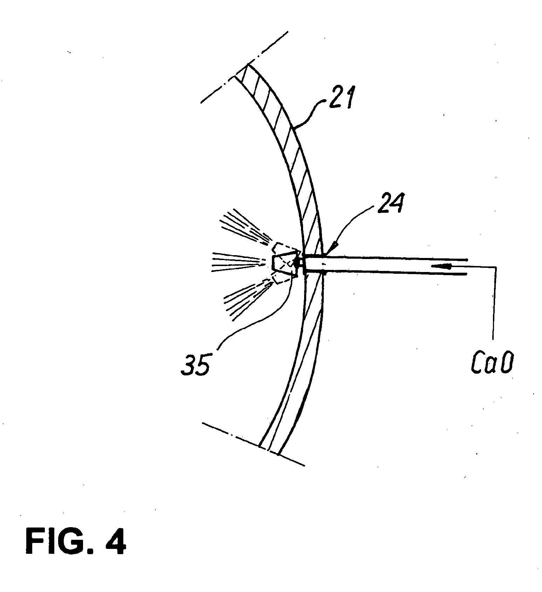

In die Öffnungen 23; 24 sind ins Innere des Durchlaufmischers reichende, rotierende Sprühdüsen 35 (vgl. Fig. 4) einmontiert, die zwecks besserer Penetration des homogenisierten Gemisches durch Mineralien und Calciumoxid auch schwenkbar angeordnet sind.

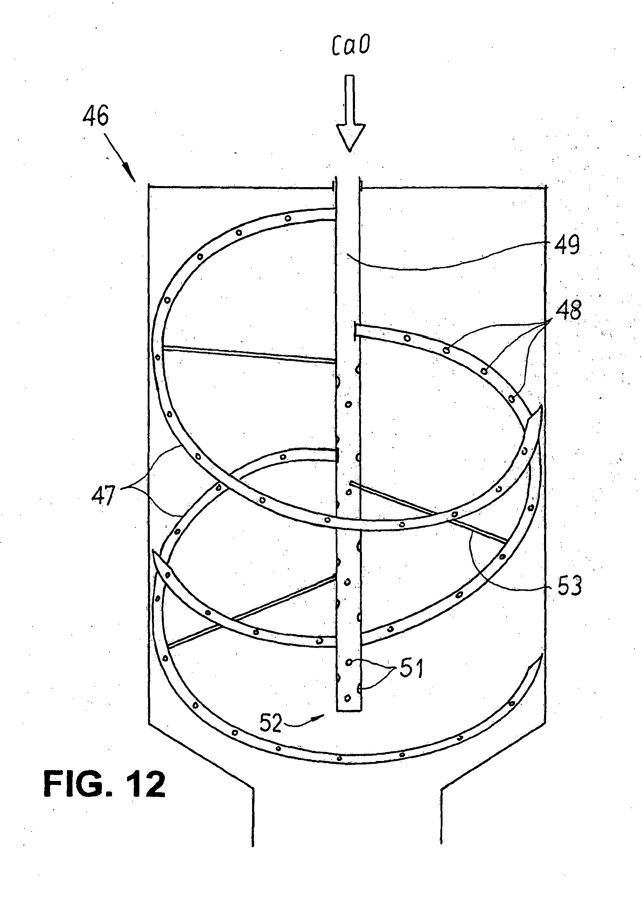

Die Fig.12 zeigt einen Durchlaufmischer 46 (Vormischer), der optional eingesetzt werden kann. Der Durchlaufmischer 46 weist ein Rührwerk mit drei gleichmäßig am Umfang des Mischers verteilten Wendeln 47 auf, die untereinander angeordnet an einer Hohlachse 49 angebracht sind. Die Hohlachse 49 weist mehrere Öffnungen 51 auf und ist an ihrem freien Ende 52 geschlossen. Über die sich drehende Hohlachse 49 kann dem Gemisch feingemahlenes Calciumoxid kontinuierlich oder impulsartig unter Druck zugeleitet werden. Die Wendeln 47 sind noch über Streben 53 mit der Hohlachse 49 verbunden und damit versteift. Außerdem weisen die Wendeln 47 mehrere durchgehende Öffnungen 48 auf. Am Mantel des Durchlaufmischers 46 sind auch nicht dargestellte Öffnungen zur Zuführung der übrigen pulverigen Substanzen, wie Oligoelementen angeordnet.

Ein wichtiger Teil der Anlage sind waagerecht liegende Umwandler 14.1, 14.2, 14.3, 14.4; 44, bestehend jeweils aus einem geschlossenen, luftdichten Behälter mit verschließbaren Einlauf- und Auslauföffungen 43.1, 43.2 und mit einer oder mehreren elektrisch angetriebenen Schnecken 27. Optional können die Umwandler 14.1, 14.2, 14.3, 14.4; 44 geneigt angeordnet sein (vgl. Fig.1 rechte Seite; Schrägstellung S), wodurch die Abnahme des dehydrierten Masse erleichtert werden kann. Ein solcher schräg liegende Umwandler ist der Fig. 10 zu entnehmen. Der Umwandler ist ein im Satzbetrieb funktionierender Reaktortyp.

Die Umwandler 14.1, 14.2, 14.3, 14.4; 44 sind jeweils von einem zusätzlichen, äußeren Mantel 40 umgeben, mit dem ein mit Wasser befüllbarer, peripherer Raum 41 geschaffen ist, welcher wiederum mit einem nicht dargestellten Wasserkreislauf in Kontakt steht.

Der Umwandler hat in vorliegenden Fall eine Länge von 10,0 m und eine Breite von 5,0 m und ist mit 1,00 x 1,50 großem Sichtfenster 34, mit drei thermischen Kontrollfühlern, drei Fühlern für pH-Messung, zwei Partialdruckmessungen und zwei Gasmessungen und drei Beleuchtungskörpern ausgestattet.

Ein wichtiger Teil der Anlage (Vorrichtung 100) ist der zweite Mischer 17 (Endmischer), in dem eine Endstufe der Homogenisierung durchgeführt wird. Der Endmischer weist einen dem des Durchlaufmischers ähnlichen Aufbau auf.

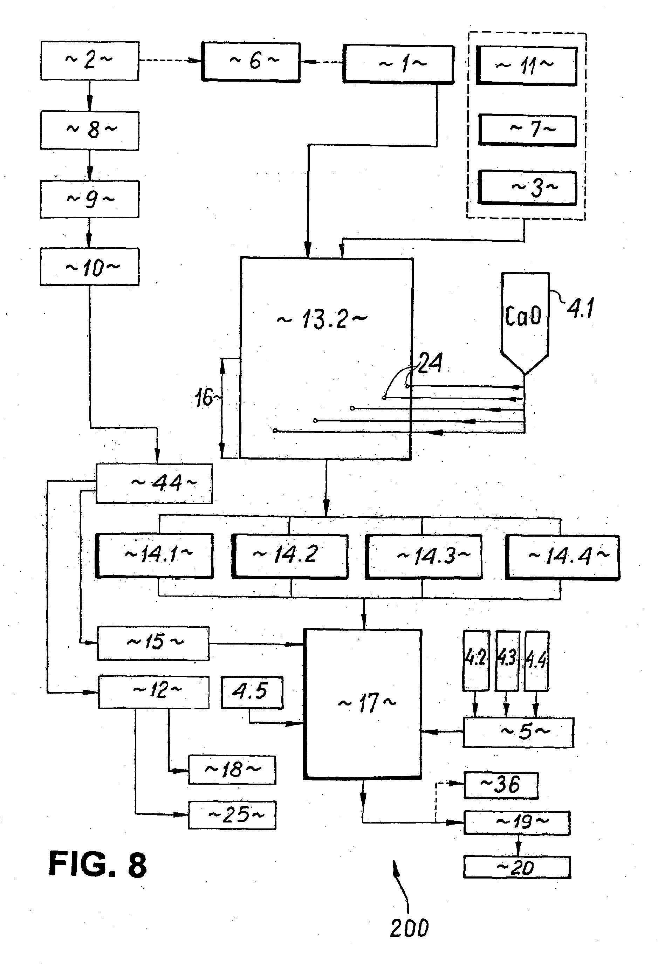

Eine in Fig. 8 gezeigte Vorrichtung 200 (Anlage) besteht aus denselben Teilen, die bei der Beschreibung der Vorrichtung 100 aufgelistet worden sind. Der Unterschied beruht hauptsächlich auf Konstruktionsänderungen des Mischers 13.2 (Vormischer) gegenüber dem Mischer 13.

An der oberen Volumenhälfte des Mischers 13.2 fehlen die Öffnungen für die Zuleitung von Mineralien. Nun weist der Mischer 13.2 nur Öffnungen 24 für die Zuführung von Calciumoxid auf, die ebenso im Bereich der unteren Volumenhälfte 16 am Mantel 21 verteilt sind.

### Funktionsweise der Anlage:

### I. Gemäß Blockschema Fig. 1 (Vorrichtung 100)

Der Klärschlammbunker 1 wurde mit einer Menge an vorher teilweise entwässertem Klärschlamm 30 befüllt.

Die Zusammensetzung des angelieferten Klärschlamms 30 entspricht einer in der Tabelle Nr. 1 dargestellten Schlamm-Analyse.

Um das Dekantieren von Klärschlamm 30 zu vermeiden, sind zwei Schhecken 33.1, 33.2 in Gang gesetzt. Die Drehrichtungen (gleich oder ungleich) sind umschaltbar. Die Schnecken 33.1, 33.2 können auch in vorbestimmten Zeitintervallen arbeiten.

Gleichzeitig wird der Celluloseschlamm durch Vermischen mit dem stark zerkleinerten Holz vorbereitet und zusammen mit dem angelieferten Klärschlamm in einem Laboratorium 6 (Eingangskontrolle) untersucht und protokolliert.

Sind die Laborergebnisse zufriedenstellend, wird mit der Homogenisierung eines Klär- und Celluloseschlamm-Gemisches 29 im Durchlaufmischer 13 begonnen.

**Tabelle Nr. 1 Analyse der angelieferten Schlämme**

| | Papierschlamm | % TM | Lebens mittelindustrie | Siedlungsschlamm (Klärschlamm) | | Durchschnitte aller drei Schlammsorten | |
|---|---|---|---|---|---|---|---|
| Allgemeine Parameter | | | | | | | |
| Wassergehalt | 60,3 | % | 92,1 | | 68,6 | | ∼ 73,67 |
| Trockenrückstand | 39,7 | % | 7,9 | | 31,47 | | ∼ 79,07 |
| Glührückstand | 44,0 | % TM | 94,0 | | 52,4 | | ∼63,50 |
| pH-Wert | 7,3 | - | 7,3 | | 8,1 | | ∼7,57 |
| | | | | | | | |

| Pflanzennährstoffe | | | | | | | |
|---|---|---|---|---|---|---|---|
| Organische Substanz | 56,0 | % TM | 6,0 | | 47,6 | | ∼ 56,33 |
| Gesamtstickstoff N | 0,60 | % TM | 3,54 | 4,20 | | ∼ 2,78 | |
| Ammoniumstickstoff NH₄-N | 0,005 | % TM | 0,038 | 0,85 | | ∼ 0,30 | |
| Gesamtphosphat P₂O₅ | 0,49 | % TM | 0,57 | 8,35 | | ∼ 3,14 | |
| Kaliumoxid K₂O | 0,03 | % TM | 0,4 | 0,30 | | ∼ 0,73 | |
| Magnesiumoxid MgO | 0,34 | % TM | 0,38 | 1,08 | | ∼ 0,60 | |
| Basisch wirks. Stoffe als CaO | 16,8 | % TM | 28,7 | 6,3 | | ∼ 17,27 | |

| Schwermetalle | | | | Grenzwer | | | |
|---|---|---|---|---|---|---|---|
| Blei Pb | 3,1 | Mg/Kg TM | 58 | 11 | 900 | | ∼24,03 |
| Cadmium Cd | 0,11 | Mg/Kg TM | 1,3 | 0,38 | * 5/ 10 | | ∼0,637 |
| Chrom Cr | 8,0 | Mg/Kg TM | 39 | 7 | 900 | | ∼54,0 |
| Kupfer Cu 14 mg {kg TM) | 35,0 | Mg/Kg TM | 780 | 26 | 800 | | ∼280.07 |
| Nickel Ni | 6,5 | Mg/Kg TM | | 28 | 200 | | ∼48,33 |
| | | | | 100 | | | |
| Quecksilber Hg | 0,025 | Mg/Kg TM | 0,094 | | 8 | | ∼0,519 |
| Zink Zn 12 mg/Kg FS TM | 29,0 | Mg/Kg TM | 1.400 | | * 2.000 / 2.500 | | ∼493,33 |

| | | | | | | | |
|---|---|---|---|---|---|---|---|
| Erläuterungen zur Tabelle Nr. 1: * Für Böden unter 5% Tongehalt bzw. 5 < pH < gelten gemäß § 4 Abs. 12 Satz 2 die kleineren Grenzwerte. Sämtliche Werte liegen weit unter den zugelassenen Höchstwerten. | | | | | | | |

Die Schlämme werden mit den weiteren Mineralien gemischt (etwa 40%).

Der aus den Klärschlamm- und Celluloseschlammbunkern 1; 3 herausfließende Schlamm gelangt direkt in den Durchlaufmischer 13 und fällt kontinuierlich auf die sich drehenden Schaufeln 39 (vgl. Fig. 6) und wird dort immer wieder durchtrennt.

Zugleich werden über die am Mantel 21 eingebrachten Öffnungen 23 (obere Volumenhälfte 18) ins Innere des Durchlaufmischers 13 Mineralien (Bezugszeichen M; Fig. 3), nämlich Lavamehl, Basaltmehl und Bentonit mittels rotierender Spritzdüsen 35 unter einem Druck von 10 bar eingespritzt. Vorher werden die Mineralien M den Silos 4.2, 4.3, 4.4 abgezogen, einer Gesteinsmühle 5 zugeführt und dort miteinander vermischt.

Das im Silo 4.1 gelagerte Calciumoxid wird mit den Mineralien nicht vermischt. Optional kann ein Mahlwerk vorgesehen sein, mit dem eine gewünschte Körnung (0,04 bi 0,06 mm) des Calciumoxids erzielt werden kann.

Das Calciumoxid gelangt über Öffnungen 24 und Spritzdüsen 35, unter einem Druck von 15 bar direkt in die untere Volumenhälfte 16 des Durchlaufmischers.

Die Durchlaufgeschwindigkeit des Gemisches 29 im Durchlaufmischer 13 wird durch Einstellung von Drehzahlen n1, n2, n3 des Rührwerks 38 so gesteuert, dass die Verweilzeit des Gemisches im Durchlaufmischer etwa 5 Minuten beträgt.

Das mit den Mineralien und Calciumoxid angereicherte Gemisch 29 wird nun den Umwandlern 14.1, 14.2, 14.3, 14.4 unter Abschirmung von äußeren Einflüssen über nicht dargestellte Kanäle luftdicht zugeführt. Die Reaktionszeit (unter atmosphärischem Druck) in den luftdicht verschlossenen Umwandlern 14.1, 14.2, 14.3, 14.4 beträgt jeweils 2 Stunden.

Nach Beendigung der hyperthermischen Reaktion wird das Gemisch dem Endmischer 17 zugeleitet, in dem eine Endstufe der Homogenisierung durchgeführt wird. Zugeleitet werden auch Zeolithe und Oligoelemente, da im Endmischer 17 eine Temperatur von etwa 60°C-70°C nicht überschritten wird.

Optional kann zwischen dem Umwandler.14.1, 14.2, 14.3, 14.4 und dem Endmischer 17 eine UV-Lampe (nicht dargestellt) zwecks Sterilisierung des Gemisches installiert sein.

Die Zuführung von Zeolithen und Oligoelementen erfolgt auf derselben Weise, wie die Zuführung von anderen Mineralien dem ersten Mischer 13. Zu diesem Zweck ist der Mantel des Endmischers 17 mit mehreren Öffnungen 23 und Spritzdüsen (nicht dargestellt) versehen.

Soll der Hausmüll in das Verfahren mit eingezogen werden, wird der Umwandler 44 in Gang gesetzt. Im Umwandler 44 erfolgt eine Reaktion des Mülls mit Calciumoxid. Als Calciumoxid wird Weichbranntkalk mit einer beschleunigten Reaktionszeit von < 2 Minuten eingesetzt. Danach werden die organischen Teile von Hausmüll dem Umwandler 44 abgezogen und über die Abnahmevorrichtung 15 direkt dem Endmischer 17 zugeführt.

Es kann auch Knochenabfall aus den Schlachthöfen und Lebensmittelverarbeitungsindustrie entsprechend zerkleinert werden und in einem nicht gezeigten Mahlwerk zum Knochenmehl gemahlen.

Die anderen Bestandteile des Hausmülls gelangen in die Sortierungsanlage 12 und weiter in einen Behälter 18 für Metalle und einen Behälter 25 für Kunststoffe.

Die fertige Masse wird dem Endmischer 17 abgezogen, einer Produktkontrolle im Laboratorium 36 unterzogen und nach einer Nachtrocknung weiter über ein nicht dargestelltes Förderband zu der Granulierungs-/Pelletierungsanlage 19 transportiert. Das Granulat oder die Pellets 50 werden einer Absackanlage 20 zugeliefert.

Die Pellets 50 (vgl. Fig. 11) weisen eine Feuchtigkeit von 20% auf, sind etwa 25 mm lang und haben einen Durchmesser von etwa 12 mm. Um die Wirkstoffabgabefläche zu erhöhen, sind die Pellets viertelstabartig abgerundet. Durch eine lockere Schüttung der Pellets untereinander und durch die Inertie wird eine Schimmelbildung vermieden.

In anderen Ausführungsformen (nicht dargestellt) sind die Pellets walzenförmig und polygonal bzw. hülsenförmig. Das Granulat weist eine Körnung von 0,2 - (6-8) mm und eine Feuchtigkeit von 5-8 % auf.

### Funktionsweise der Anlage:

### II. Gemäß Blockschema Fig. 8 (Vorrichtung 200)

Es werden die gleichen Verfahrensschritte, wie bei der Vorrichtung 100 vorgenommen. Allerdings wird dem Vormischer 13.2 über die Öffnungen 24 nur Calciumoxid aus dem Silo 4.1 zugeleitet. Die restlichen mineralischen Substanzen und Oligoelemente werden von den Silos 4.2, 4.3, 4.4 und 4.5, gegebenenfalls über Gesteinsmühle 5 direkt dem Endmischer 17 zugeführt.

In der Tabelle Nr. 2 sind Mengen an Ingredienzien, bezogen auf eine Jahrproduktion angegeben.

**Tabelle Nr. 2 Zuführung von Ingredienzien**

| Ingredienzien | Menge (t) | TS (%) | Masse CaO | Ablauf |
|---|---|---|---|---|
| Klärschlamm | 50.000 | 30 | 15.000 | Aus dem Klärschlammbunker 1 direkt in den Durchlaufmischer 13 |
| Celluloseschlamm | 40.000 | 30 | 12.000 | Aus dem Klärschlammbunker 1 direkt in den Durchlaufmischer 13 |
| Calciumoxid | 16.200 | 100 | 16.200 | In die untere Mischhälfte (Durchlaufmischer 13) nach etwa 3 Minuten |
| Basaltmehl | 16.000 | 100 | 16.000 | In den zweiten Mischer 17 |
| Zeolith | 2.000 | 100 | 2.000 | In den zweiten Mischer 17 |
| Bentonit | 2.000 | 100 | 2.000 | Unmittelbar nach bzw. mit dem Einfüllen oder Mischer 17 |
| Oligoelemente | 0,5 kg pro 1 tone | 100 | 400 | Nach Entnahme aus dem Umwandler 14, also nach 123 Minuten, direkt in den zweiten Mischer 17 |

### Bezugszeichenliste:

- 1: Klärschlammbunker
- 2: Hausmüllbunker
- 3: Celluloseschlamm
- 4.1, 4.2, 4.3, 4.4, 4.5: Silo
- 5: Gesteinsmühle
- 6: Laboratorium (Eingangskontrolle)
- 7: Schredder
- 8: Aufschlitzvorrichtung (Müllsäcke)
- 9: Sortierungsanlage
- 10: Müllvorbereitungsanlage
- 11: Holz- und Holzwerkstofflager
- 12: Sortierungsanlage
- 13: Mischer (Durchlaufmischer)
- 13.1: Mischer (Durchlaufmischer)
- 14.1, 14.2, 14.3, 14.4: Umwandler (Klärschlamms)
- 15: Abnahmevorrichtung (org. Teile)
- 16: Volumenhälfte
- 17: Mischer
- 18: Behälter f. Metalle
- 19: Granulierungs-/Pelletierungsanlage
- 20: Absackanlage
- 21: Mantel
- 22: Revisionsöffnung (Tür)
- 23: Öffnung
- 24: Öffnung
- 25: Behälter f. Kunststoffe
- 26: Boden
- 27: Schnecke
- 28: Mantelteil
- 29: Gemisch
- 30: Klärschlamm
- 31: Wandung
- 32: Boden
- 33.1,33.2: Schnecke
- 34: Sichtfenster
- 35: Sprühdüse
- 36: Laboratorium (Ausgangskontrolle)
- 37: Verkleidung
- 38: Rührwerk
- 39: Schaufel
- 40: Mantel
- 41: Raum
- 42.1,42.2: Kante
- 43.1: Einlauföffung
- 43.2: Auslauföffung
- 44: Umwandler (Hausmüll)
- 45: Schnecke
- 46: Mischer (Vormischer)
- 47: Wendel
- 48: Öffnung
- 49: Hohlachse
- 50: Pellet
- 51: Öffnung
- 52: Ende (v. 49)
- 53: Strebe

- 100; 200: Vorrichtung (Anlage)
- A, A1, A2: Drehachse
- B: Abstand
- BF: Bodenfläche
- β: Anstellwinkel
- E1, E2, E3: Ebene
- M: Mineralien
- n1, n2, n3: Drehzahl
- S: Schrägstellung

## Patentansprüche

1. Verfahren zur Herstellung von feststoffartigem, biologisch abbaubarem Düngemittel aus kommunalem und/oder aus der Nahrungsmittelindustrie stammendem Klärschlamm und aus der Papierindustrie stammendem Celluloseschlamm, mit Zugabe von alkalischen Substanzen, mit nachfolgenden Verfahrensschritten:
- der angelieferte Klärschlamm wird vorab entwässert, bis er etwa 20% bis 40% Trockensubstanz aufweist, und in einem Klärschlammbunker (1) zwischengelagert,
- der entwässerte Klärschlamm wird wenigstens in unterstem Teil des Klärschlammbunkers (1) kontinuierlich gerührt,
- der so vorbehandelte Klärschlamm wird aus dem Klärschlammbunker (1) herausgetragen, zusammen mit vorher vorbereitetem Celluloseschlamm direkt wenigstens einem Durchlaufmischer (13; 13.1; 13.2) zu einem Mischprozess zugeführt und dort zu einem Klärschlamm- und Celluloseschlamm-Gemisch (29) verarbeitet wird,
**dadurch gekennzeichnet, dass**
- während des Mischprozesses im Durchlaufmischer (13) dem Klärschlamm- und Celluloseschlamm-Gemisch (29) Calciumoxid unter einem Druck zwischen 1,0 bar und 50 bar, vorzugsweise zwischen 15 bar und 30 bar, derart zugeführt wird, dass das mit Calciumoxid behandelte Gemisch den Durchlaufmischer (13) verlässt, bevor eine exothermische Reaktion einsetzt,
- danach das mit dem Calciumoxid behandelte Gemisch wenigstens einem Umwandler (14.1, 14.2; 14.3, 14.4) zugeleitet wird, in dem das Gemisch einem weiteren Mischvorgang unterzogen und durch die Hyperthermie der chemischen Reaktion dehydriert wird,
- dem dehydrierten Gemisch - nach deren Abkühlung - Oligoelemente zugeführt werden,
- und danach das dehydrierte und mit den Oligoelementen angereicherte Gemisch einer Nachtrocknung mit anschließender Pulverisierung, Granulierung oder Pelletierung unterzogen wird.

2. Verfahren nach Anspruch 1, **dadurch gekennzeichnet, dass** der Celluloseschlamm aus angefeuchtetem, zerkleinertem Holz und/oder Holzwerkstoff und/oder zerkleinertem Papier und Karton, aus Pflanzenteilen und/oder Papierbrei und /oder Lebensmittelresten besteht.

3. Verfahren nach Anspruch 1, **dadurch gekennzeichnet, dass** beim Mischprozess im Durchlaufmischer (13) nur ein der Erdanziehungskraft zugewandter Teil des homogenisierten Gemisches mit Calciumoxid behandelt wird.

4. Verfahren nach Anspruch 3, **dadurch gekennzeichnet, dass** der der Erdanziehungskraft zugewandte Teil des homogenisierten Gemisches höchstens einer Volumenhälfte (16) des Durchlaufmischers (13) entspricht.

5. Verfahren nach einem der Ansprüche 1 bis 5, **dadurch gekennzeichnet, dass** das Calciumoxid an mehreren Stellen des Durchlaufmischers (13; 13.1; 13.2) verteilt in die Volumenhälfte (16) des homogenisierten Gemisches konzentrisch eingespritzt wird.

6. Verfahren nach einem der Ansprüche 1 bis 5, **dadurch gekennzeichnet, dass** als Calciumoxid Hartbranntkalk eingesetzt wird, dessen Reaktionszeit frühestens in 6 Minuten einsetzt.

7. Verfahren nach einem der Ansprüche 1 bis 6, **dadurch gekennzeichnet, dass** in eine zweite, oberhalb der ersten liegende Volumenhälfte (18) des Durchlaufmischers (13) pulverige Mineralien unter Druck zugeführt werden.

8. Verfahren nach Anspruch 7, **dadurch gekennzeichnet, dass** der Druck im Bereich zwischen 1,0 bar und 30 bar, vorzugsweise zwischen 5 bar und 15 bar liegt.

9. Verfahren nach einem der vorhergehenden Ansprüche, **dadurch gekennzeichnet, dass** die pulverigen Mineralien dem dehydrierten, aus dem Umwandler (14.1, 14.2; 14.3, 14.4) herausgetragenen Gemisch zugeführt werden.

10. Verfahren nach einem der vorhergehenden Ansprüche, **dadurch gekennzeichnet, dass** die Oligoelemente und Mineralien eine Körnung zwischen 0,01 mm bis 0,8 mm, vorzugsweise zwischen 0,02 mm bis 0,06 mm aufweisen.

11. Verfahren nach einem der vorhergehenden Ansprüche, **dadurch gekennzeichnet, dass** das Calciumoxid und/oder Mineralien impulsartig in das homogenisierte Gemisch eingespritzt werden.

12. Verfahren nach einem der vorhergehenden Ansprüche, **dadurch gekennzeichnet, dass** das durch den Durchlaufmischer (13) kontinuierlich fließende und aus diesem der Schwerkraft folgend heraus fließende Gemisch chargenartig in dem (in den) Umwandler (-n) behandelt wird.

13. Verfahren nach Anspruch 12, **dadurch gekennzeichnet, dass** das aus dem Durchlaufmischer (13; 13.1; 13.2) auslaufende Gemisch vor den äußeren Einflüssen abgeschirmt ist und luftdicht in den Umwandler (14.1, 14.2; 14.3, 14.4) gelangt.

14. Verfahren nach einem der vorhergehenden Ansprüche, **dadurch gekennzeichnet, dass** die bei dem Mischvorgang im Umwandler (14.1, 14.2, 14.3, 14.4; 44) entstehende Hyperthermie durch Wasserkühlung temperiert wird.

15. Verfahren nach Anspruch 14, **dadurch gekennzeichnet, dass** die im Umwandler entstandene Hyperthermie so eingestellt ist, dass eine Temperatur von 120° C nicht überschritten wird.

16. Verfahren nach Anspruch 14 und 15, **dadurch gekennzeichnet, dass** das durch Hyperthermie erwärmte Wasser zu einem Wasserkreislauf zurückgeleitet wird.

17. Verfahren nach einem der vorhergehenden Ansprüche, **dadurch gekennzeichnet, dass** das dem Umwandler (14.1, 14.2, 14.3, 14.4; 44) entnommene Gemisch in einem weiteren Mischer (17) behandelt wird.

18. Verfahren nach Anspruch 17, **dadurch gekennzeichnet, dass** dem Mischer (17) auch vorher vorgemischte, aus Verarbeitung von Hausmüll gewonnene organische Substanzen zugeführt und dort zusammen mit dem Umwandler (14.1, 14.2, 14.3, 14.4) entnommenen, aus der Verarbeitung von Klärschlamm stammenden Gemisches und mit den Oligoelementen einer weiteren Homogenisierung unterzogen werden.

## Claims

1. Method for producing a solid-like, biodegradable fertiliser from municipal sludge and/or food industry sludge and from paper industry cellulose sludge, by addition of alkali substances, comprising the method steps of:
- the delivered sludge is initially dehydrated until it has approximately 20% to 40% dry substance, and is intermediately stored in a sludge bunker (1),
- the dehydrated sludge is continuously stirred at least in the lowermost part of the sludge bunker (1),
- the sludge which is pre-treated in this manner is removed from the sludge bunker (1), and together with previously prepared cellulose sludge is fed directly to at least one continuous mixer (13; 13.1; 13.2) to a mixing process where it is processed to form a sludge and cellulose sludge mixture (29),
**characterised in that**
- during the mixing process in the continuous mixer (13) calcium oxide at a pressure between 1.0 bar and 50 bar, preferably between 15 bar and 30 bar, is fed to the sludge and cellulose sludge mixture (29) such that the mixture treated with calcium oxide leaves the continuous mixer (13) before an exothermic reaction begins,
- then the mixture treated with the calcium oxide is supplied to at least one converter (14.1, 14.2; 14.3, 14.4), in which the mixture is subjected to a further mixing procedure and is dehydrated by the hyperthermia of the chemical reaction,
- oligo-elements are fed to the dehydrated mixture after cooling thereof,
- and then the dehydrated mixture which is enriched with the oligo-elements is subjected to final drying with subsequent pulverisation, granulation or pelletisation.

2. Method as claimed in claim 1, **characterised in that** the cellulose sludge consists of wetted, comminuted wood and/or derived timber product and/or comminuted paper and cardboard, plant parts and/or paper pulp and/or food remnants.

3. Method as claimed in claim 1, **characterised in that** during the mixing process in the continuous mixer (13) only a part of the homogenised mixture directed towards gravitational force is treated with calcium oxide.

4. Method as claimed in claim 3, **characterised in that** the part of the homogenised mixture directed towards gravitational force corresponds at the most to a volume half (16) of the continuous mixer (13).

5. Method as claimed in any one of claims 1 to 5, **characterised in that** the calcium oxide is injected concentrically into the volume half (16) of the homogenised mixture distributed at a plurality of locations in the continuous mixer (13; 13.1; 13.2).

6. Method as claimed in any one of claims 1 to 5, **characterised in that** the calcium oxide used is hard burnt lime, of which the reaction time begins at the earliest in 6 minutes.

7. Method as claimed in any one of claims 1 to 6, **characterised in that** pulverulent minerals are fed under pressure into a second volume half(18) of the continuous mixer (13) situated above the first volume hall.

8. Method as claimed in claim 7, **characterised in that** the pressure is in the range between 1.0 bar and 30 bar, preferably between 5 bar and 15 bar.

9. Method as claimed in any one of the preceding claims, **characterised in that** the pulverulent minerals are fed to the dehydrated mixture removed from the converter (14.1, 14.2; 14.3, 14.4).

10. Method as claimed in any one of the preceding claims, **characterised in that** the oligo-elements and minerals have a grain size between 0.01 mm to 0.8 mm, preferably between 0.02 to 0.06 mm.

11. Method as claimed in any one of the preceding claims, **characterised in that** the calcium oxide and/or minerals are injected in a pulsed manner into the homogenised mixture.

12. Method as claimed in any one of the preceding claims, **characterised in that** the mixture flowing continuously through the continuous mixer (13) and flowing out of said mixer owing to gravity is treated in batches in the converter(s).

13. Method as claimed in claim 12, **characterised in that** the mixture running out of the continuous mixer (13; 13.1; 13.2) is shielded from external influences and passes in an airtight manner into the converter (14.1, 14.2; 14.3, 14.4).

14. Method as claimed in any one of the preceding claims, **characterised in that** the hyperthermia arising during the mixing procedure in the converter (14.1, 14.2, 14.3, 14.4; 44) is tempered by water cooling.

15. Method as claimed in claim 14, **characterised in that** the hyperthermia produced in the converter is adjusted such that a temperature of 120°C is not exceeded.

16. Method as claimed in claim 14 or 15, **characterised in that** the water heated by hyperthermia is directed back to a water circuit.

17. Method as claimed in any one of the preceding claims, **characterised in that** the mixture removed from the converter (14.1, 14.2, 14.3, 14.4; 44) is treated in a further mixer (17).

18. Method as claimed in claim 17, **characterised in that** previously pre-mixed organic substances obtained from the processing of household rubbish are also fed to the mixer (17) where they are subjected to further homogenisation together with the mixtures, which are removed from the converter (14.1, 14.2, 14.3, 14.4) and are obtained from the processing of sludge, and the oligo-elements.

## Revendications

1. Procédé de production d'un engrais de type solide et biodégradable, à partir de boues d'épuration provenant de stations communales et/ou de l'industrie agroalimentaire et à partir de boues de cellulose provenant de l'industrie papetière additionnées de substances alcalines, ledit procédé comportant les étapes suivantes :
- les boues d'épuration livrées sont préalablement deshydratées jusqu'à ce qu'elles présentent un taux de substances sèches compris entre 20 et 40 pourcent, puis stockées temporairement dans un silo à boues (1) ;
- les boues d'épuration déshydratées sont malaxées en continu, au moins dans la partie inférieure du silo (1) ;
- les boues d'épuration ainsi pré-traitées sont extraites du silo (1), introduites directement - en même temps que des boues de cellulose préparées à cet effet - dans au moins un mélangeur continu (13 ; 13.1 ; 13.2) dans lequel lesdites boues sont transformées, par malaxage, en un mélange de boues d'épuration et de boues de cellulose (29),
Caractérisé, premièrement, en ce que l'on ajoute au mélange de boues d'épuration et de boues de cellulose (29), durant le malaxage dans le mélangeur continu (13), de l'oxyde de calcium, sous une pression comprise entre 1,0 et 50 bar, de préférence comprise entre 15 et 30 bar, de sorte telle que le mélange traité à l'oxyde de calcium sort du mélangeur continu (13) avant que se déclenche une réaction exothermique,
deuxièmement, en ce que l'on introduit ensuite le mélange traité à l'oxyde de calcium dans au moins un convertisseur (14.1, 14.2 ; 14.3, 14.4) dans lequel le mélange subit un malaxage supplémentaire tout en étant déshydraté par l'hyperthermie due à la réaction chimique,
troisièmement, en ce que l'on ajoute des oligoéléments au mélange déshydraté, après refroidissement de ce dernier et,
quatrièmement, en ce que le mélange déshydraté et enrichi en oligoéléments est ensuite soumis à un séchage suivi d'une pulvérisation, d'une granulation ou d'une pelletisation.

2. Procédé selon la revendication 1, **caractérisé en ce que** les boues de cellulose sont composées de bois humidifié et réduit en morceaux et/ou de matériau de bois et/ou de papier et de carton déchiqueté, de fragments de plantes et/ou de pâte à papier et/ou de résidus alimentaires.

3. Procédé selon la revendication 1, **caractérisé en ce que** lors du malaxage dans le mélangeur continu (13), seule une partie du mélange homogénéisé sensible à l'attraction terrestre est traitée à l'oxyde de calcium.

4. Procédé selon la revendication 3, **caractérisé en ce que** la partie du mélange homogénéisé sensible à l'attraction terrestre correspond, au maximum, à une moitié en volume (16) du mélangeur continu (13).

5. Procédé selon l'une quelconque des revendications 1 à 4, **caractérisé en ce que** l'injection de l'oxyde de calcium dans la moitié en volume (16) du mélange homogénéisé est réalisée, de façon concentrique, en plusieurs points du mélangeur continu (13; 13.1 ; 13.2).

6. Procédé selon l'une quelconque des revendications 1 à 5, **caractérisé en ce que** l'oxyde de calcium employé est de la chaux vive dont la réaction se déclenche au bout de six minutes au plus tôt.

7. Procédé selon l'une quelconque des revendications 1 à 6, **caractérisé en ce que** des minéraux pulvérulents sont ajoutés sous pression dans la seconde moitié en volume (18) du mélangeur continu (13), située au-dessus de la première.

8. Procédé selon la revendication 7, **caractérisé en ce que** la pression appliquée est comprise entre 1,0 et 30 bar, de préférence comprise entre 5 et 15 bar.

9. Procédé selon l'une quelconque des revendications précédentes, **caractérisé en ce que** les minéraux pulvérulents sont ajoutés au mélange déshydraté extrait du convertisseur (14.1, 14.2 ; 14.3, 14.4).

10. Procédé selon l'une quelconque des revendications précédentes, **caractérisé en ce que** les oligoéléments et les minéraux possèdent une granulométrie comprise entre 0,01 et 0,8 mm, de préférence comprise entre 0,02 et 0,06 mm.

11. Procédé selon l'une quelconque des revendications précédentes, **caractérisé en ce que** l'oxyde de calcium et/ou les minéraux sont injectés par impulsions dans le mélange homogénéisé.

12. Procédé selon l'une quelconque des revendications précédentes, **caractérisé en ce que** le mélange traversant le mélangeur (13) en flux continu et s'écoulant de ce dernier sous l'effet de la pesanteur, est traité dans le ou les convertisseur(s) par charges successives.

13. Procédé selon la revendication 12, **caractérisé en ce que** le mélange s'écoulant du mélangeur continu (13; 13.1 ; 13.2) est protégé des influences extérieures et parvient au convertisseur (14.1, 14.2 ; 14.3, 14.4) par une voie étanche à l'air.

14. Procédé selon l'une quelconque des revendications précédentes, **caractérisé en ce que** l'hyperthermie se produisant lors du malaxage dans le convertisseur (14.1, 14.2 ; 14.3, 14.4) est réduite par refroidissement à l'eau.

15. Procédé selon la revendication 14, **caractérisé en ce que** l'hyperthermie se produisant dans le convertisseur (14.1, 14.2 ; 14.3, 14.4) est réglée de façon à ne pas dépasser une température de 120 degré Celsius.

16. Procédé selon les revendications 14 et 15, **caractérisé en ce que** l'eau chauffée par hyperthermie est reconduite dans un circuit d'eau.

17. Procédé selon l'une quelconque des revendication précédentes, **caractérisé en ce que** le mélange extrait du convertisseur (14.1, 14.2 ; 14.3, 14.4) est traité dans un mélangeur (17) additionnel.

18. Procédé selon la revendication 17, **caractérisé en ce que** l'on introduit également dans le mélangeur (17) des substances organiques pré-mélangées obtenues par la transformation de déchets ménagers, lesdites substances organiques y étant soumises à une homogénéisation supplémentaire, avec le mélange issu du traitement de boues d'épuration et extrait du convertisseur (14.1, 14.2 ; 14.3, 14.4) ainsi qu'avec les oligoéléments.
